# EUROPÄISCHE PATENTSCHRIFT

(11) **EP 2 924 523 B1**
(45) Veröffentlichungstag und Bekanntmachung des Hinweises auf die Patenterteilung: **19.10.2016**
(21) Anmeldenummer: 15159661.6
(22) Anmeldetag: 18.03.2015
(51) Int. Cl.: G05B 19/042, B23K 9/10, G06F 9/445

(54) **VERFAHREN ZUR FUNKTIONSERWEITERUNG EINES ELEKTRISCHEN SCHWEIßGERÄTS UND SCHWEIßGERÄT ZUR DURCHFÜHRUNG DES VERFAHRENS**
METHOD FOR EXPANDING THE FUNCTION OF AN ELECTRICAL WELDING DEVICE AND WELDING DEVICE FOR CARRYING OUT THE METHOD
PROCÉDÉ D'EXTENSION DES FONCTIONS D'UN APPAREIL DE SOUDURE ÉLECTRIQUE ET APPAREIL DE SOUDURE DESTINÉ À L'EXÉCUTION DU PROCÉDÉ

(30) Priorität: 26.03.2014 DE 102014104227
(43) Veröffentlichungstag der Anmeldung: 30.09.2015
(73) Patentinhaber: Lorch Schweisstechnik GmbH, 71549 Auenwald (DE)
(72) Erfinder: Göppert, Josef, 72127 Kusterdingen (DE)
(74) Vertreter: Hoeger, Stellrecht & Partner Patentanwälte mbB

(56) Entgegenhaltungen:
- US-A1- 2007 112 684
- US-A1- 2007 267 394
- US-A1- 2012 022 882

## Beschreibung

Die Erfindung betrifft ein Verfahren zur Erweiterung der Funktionen eines elektrischen Schweißgeräts, das eine programmierbare Steuereinheit und eine Eingabeeinrichtung aufweist, mit den Merkmalen des Oberbegriffes von Patentanspruch 1.

Außerdem betrifft die Erfindung ein elektrisches Schweißgerät zur Durchführung des Verfahrens, mit den Merkmalen des Oberbegriffes von Patentanspruch 19.

Elektrische Schweißgeräte zum Elektroschweißen eines Werkstücks umfassen üblicherweise eine Steuereinheit, ein Leistungsteil und einen an das Leistungsteil anschließbaren Schweißbrenner mit einer Schweißelektrode. Zwischen der Schweißelektrode und dem zu schweißenden Werkstück wird ein Lichtbogen erzeugt, unter dessen Wirkung eine Schweißnaht erzeugt wird. Vom Leistungsteil werden die hierfür erforderliche elektrische Schweißspannung und der erforderliche elektrische Schweißstrom bereitgestellt. Die Steuereinheit steuert das Leistungsteil und weist üblicherweise eine Eingabeeinrichtung und eine Anzeigeeinrichtung auf. Die Eingabeeinrichtung weist Bedienelemente zum Bedienen des Schweißgeräts auf und an der Anzeigeeinrichtung kann der Benutzer üblicherweise die aktuellen Schweißparameter ablesen. In manchen Fällen weist das Schweißgerät zusätzlich ein Drahtvorschubteil auf, das häufig ebenfalls von der Steuereinheit gesteuert wird und dem Schweißbrenner Schweißmaterial in Form eines Schweißdrahtes zuführt.

In der Steuereinheit können unterschiedliche Schweißprogramme gespeichert sein, beispielsweise zur Durchführung unterschiedlicher Schweißverfahren und/oder zum Schweißen unterschiedlicher Werkstücke.

Vom Benutzer werden derartige Schweißgeräte häufig zur Erledigung ganz bestimmter Schweißaufgaben erworben. Es kann allerdings vorkommen, dass der Benutzer zu einem späteren Zeitpunkt weitere Schweißaufgaben erledigen möchte, die mit den vom Hersteller des Schweißgeräts zunächst vorgegebenen Funktionen nicht bewältigt werden können. Der Benutzer hat dann die Möglichkeit, die Funktionen des Schweißgeräts zu erweitern, so dass er beispielsweise weitere Bedienmöglichkeiten hat oder ihm weitere Schweißprogramme zur Verfügung gestellt werden. Eine Funktionserweiterung kann auch darin bestehen, dass eine Schnittstelle des Schweißgeräts freigeschaltet wird, so dass an das Schweißgerät Automatisierungssysteme oder Zusatzgeräte angeschlossen werden können. Die Freischaltung der Schnittstelle kann auch erfolgen, um Schweißparameter, die bei der Erledigung einer bestimmten Schweißaufgabe vorliegen, berührungslos oder berührungsbehaftet von der Steuereinheit auslesen und dokumentieren zu können.

Zur Funktionserweiterung kann eine Software zum Einsatz kommen. Die Software kann der Benutzer beispielsweise vom Hersteller des Schweißgeräts erwerben. Sie kann auf einem von der Steuereinheit auslesbaren Speichermedium gespeichert sein und nach Einlesen der Software in die Steuereinheit kann von dieser die gewünschte Funktionserweiterung des Schweißgeräts vorgenommen werden.

Um eine unerlaubte Vervielfältigung der Software zu unterbinden, kann der Hersteller der Software das unerlaubte Kopieren technisch verhindern. Dies schränkt allerdings den Einsatz der Software insoweit ein, dass auch ein berechtigter Benutzer keinerlei Kopien anfertigen kann. Die Software kann auch durch ein Password geschützt sein, so dass sie nur von einem Berechtigten, der das Password kennt, benutzt werden kann. Allerdings kann das Password vom Berechtigten an unberechtigte Dritte weitergegeben werden, so dass diese wiederum die Möglichkeit haben, die Software ohne Kontrolle des Herstellers zu verwenden.

Es kann vorgesehen sein, dass die Software nur innerhalb eines bestimmten Zeitraums aktiviert oder benutzt werden kann. Hierbei ergibt sich die Schwierigkeit, dass der berechtigte Benutzer bereits beim Erwerb der Software den gewünschten Zeitraum der Aktivierung kennen muss, so dass derartige Software nicht ohne Weiteres bedarfsweise verwendet werden kann.

Es kann auch vorgesehen sein, dass der Einsatz der Software auf ganz bestimmte Schweißgeräte beschränkt wird, die der Benutzer beim Erwerb der Software anhand ihrer Serialnummer definiert. Der Benutzer muss dann allerdings bereits beim Erwerb der Software konkret angeben, für welche Schweißgeräte sie verwendet werden soll. Dies ist sehr umständlich und kaum praktikabel.

Aus dem Dokument US 2012/022882 A1 ist ein Verfahren mit den Merkmalen des Oberbegriffes von Patentanspruch 1 bekannt. Bei diesem Verfahren kann ein Benutzer zur Erweiterung der Funktionen eines elektrischen Schweißgeräts bei einem externen Lizenzverwaltungssystem, beispielsweise bei einem externen Server, eine Lizenz für eine Funktionserweiterung anfordern, wobei unter Verwendung der Serialnummer des Schweißgeräts und weiterer Angaben, die das konkrete Schweißgerät beschreiben, eine Anfrage an das Lizenzverwaltungssystem übertragen wird und dieses prüft, ob für das konkrete Schweißgerät eine Lizenz erteilt werden kann. Falls dies der Fall ist, überträgt das Lizenzverwaltungssystem entsprechende Lizenzdaten in verschlüsselter Form an das Schweißgerät, das anschließend die lizenzierte Funktionserweiterung vornimmt.

Aus dem Dokument US 2007/267394 A1 ist ein Verfahren zur zeitweiligen Erweiterung der Funktionen eines elektrischen Schweißgeräts bekannt, wobei das Schweißgerät eine programmierbare Steuereinheit mit einer Benutzerschnittstelle aufweist, über die die Steuereinheit ein Schweißprogramm und/oder eine Autorisierung empfangen kann. An die Benutzerschnittstelle kann ein PDA (Personal Digital Assistant), eine Netzwerkschnittstelle, ein Roboter und/oder eine Internetverbindung angeschlossen werden. Die Steuereinheit kann verschiedene Module aufweisen, die über die Benutzerschnittstelle für eine vorgegebene Zeitspanne aktiviert werden können zur zeitweiligen Erweiterung der Funktionen des Schweißgeräts.

Aus dem Dokument US 2007/0112684 A1 ist ein Verfahren bekannt, mit dem von einem Lizenz-Server geprüft werden kann, ob ein Anwendungsprogramm eines Client lizenziert ist. Vom Client wird über das Internet ein Lizenz-Nachforschungsantrag an den Lizenz-Server übermittelt. Der Lizenz-Nachforschungsantrag beinhaltet zwingend eine Identifizierung der Hardware des Client. Der Lizenz-Server prüft, ob für ein bestimmtes Software-Modul des Clients eine Lizenz vorliegt. Falls dies der Fall ist, überträgt der Lizenz-Server über das Internet an den Client eine Nachricht mit einer Lizenz-Nummer. Der Client prüft, ob die ihm übermittelte Nachricht des Lizenz-Servers die Lizenz-Nummer enthält. Ist dies der Fall, aktiviert der Client das Software-Modul.

Aufgabe der vorliegenden Erfindung ist es, ein Verfahren der gattungsgemäßen Art bereitzustellen, das dem berechtigten Benutzer einen vergrößerten Handlungsspielraum für eine Funktionserweiterung zur Verfügung stellt und das dennoch eine unberechtigte Funktionserweiterung verhindert.

Diese Aufgabe wird durch ein Verfahren mit den Merkmalen von Patentanspruch 1 gelöst.

Der Benutzer hat somit die Möglichkeit, der Steuereinheit einen Steuerbefehl für eine gewünschte Funktionserweiterung zu erteilen, und durch Zusammenwirken der Steuereinheit mit einer externen Prüfeinrichtung wird die Berechtigung zur Funktionserweiterung geprüft. Liegt eine Berechtigung vor, so kann die Steuereinheit die Funktionserweiterung vornehmen. Zum Prüfen der Berechtigung erzeugt die Steuereinheit unter Verwendung des eingegebenen Steuerbefehls einen Gerätecode. Der Gerätecode wird an eine externe Prüfeinrichtung übertragen. Die externe Prüfeinrichtung verwendet den von der Steuereinheit erzeugten Gerätecode zum Prüfen der Berechtigung zur Funktionserweiterung. Anhand des Gerätecodes kann somit die externe Prüfeinrichtung eine berechtigte Funktionserweiterung von einer unberechtigten Funktionserweiterung unterscheiden. Bei Vorliegen einer Berechtigung erzeugt die externe Prüfeinrichtung einen externen Aktivierungscode, der der Steuereinheit des Schweißgeräts übermittelt wird. Die Steuereinheit prüft die Gültigkeit des externen Aktivierungscodes. Stellt die Steuereinheit fest, dass der übermittelte externe Aktivierungscode gültig ist, so dient ihr dies als Berechtigung zur Funktionserweiterung, so dass sie anschließend die Funktionserweiterung vornehmen kann. Das erfindungsgemäße Verfahren kann sehr einfach durchgeführt werden, ohne dass das Schweißgerät permanent in ein Computernetzwerk eingebunden und an einen Computer angeschlossen sein muss.

Die Berechtigung zur Durchführung einer Funktionserweiterung wird in doppelter Weise geprüft. Zum einen wird von der externen Prüfeinrichtung eine entsprechende Berechtigung durchgeführt auf Grundlage eines Gerätecodes, den die externe Prüfeinrichtung von der Steuereinheit eines bestimmten Schweißgeräts erhält. Eine weitere Berechtigungsprüfung wird dann von der Steuereinheit durchgeführt, wobei diese zur Berechtigungsprüfung den von der externen Prüfeinrichtung erzeugten externen Aktivierungscode verwendet. Damit kann auf konstruktiv einfache Weise sichergestellt werden, dass nur diejenigen Steuereinheiten eine Funktionserweiterung durchführen können, die auf Grundlage eines von ihnen erzeugten Gerätecodes einen gerätecodespezifischen externen Aktivierungscode von der externen Prüfeinrichtung erhalten haben.

Gemäß der Erfindung beinhaltet der Steuerbefehl, der der Steuereinheit vom Benutzer erteilt wird, eine Identifikationsnummer, die eine gewünschte Funktionserweiterung charakterisiert. Die Identifikationsnummer wird von der Steuereinheit zur Erzeugung des Gerätecodes verwendet, wobei die Identifikationsnummer codiert wird.

Ergänzend zur Identifikationsnummer können von der Steuereinheit zur Erzeugung des Gerätecodes auch andere Daten oder Informationen verwendet werden, beispielsweise eine Vorgangsnummer, die einen bestimmten Funktionserweiterungsvorgang, der an dem jeweiligen Schweißgerät erfolgt, charakterisiert. Wie nachstehend noch näher erläutert, kann zur Erzeugung des Gerätecodes beispielsweise auch eine das Schweißgerät eindeutig identifizierende Gerätekennung verwendet werden und/oder Informationen, die die Konfiguration des jeweiligen Schweißgeräts charakterisieren.

Zur Erzeugung des externen Aktivierungscodes wird bei einer vorteilhaften Ausführungsform des erfindungsgemäßen Verfahrens ein Verschlüsselungsalgorithmus verwendet, der den Gerätecode nutzt. Geeignete Verschlüsselungsalgorithmen sind dem Fachmann bekannt und bedürfen daher vorliegend keiner näheren Erläuterung.

Es kann auch vorgesehen sein, dass von der externen Prüfeinrichtung zur Erzeugung des externen Aktivierungscodes lediglich eine oder mehrere Teilinformationen verschlüsselt werden, die der Gerätecode beinhaltet. Beispielsweise kann zur Erzeugung des externen Aktivierungscodes die Identifikationsnummer verschlüsselt werden. Wie bereits erläutert, kann der Gerätecode beispielsweise auch eine Vorgangsnummer beinhalten, die die Steuereinheit des Schweißgeräts zur Erzeugung des Gerätecodes verwendet hat, und zur Erzeugung des externen Aktivierungscodes kann diese Vorgangsnummer verschlüsselt werden.

Es kann auch vorgesehen sein, dass von der Steuereinheit zur Erzeugung des Gerätecodes eine von der Steuereinheit generierte Zufallsinformation, beispielsweise eine Zufallszahl, verwendet wird. Die Zufallsinformation kann von der externen Prüfeinrichtung aus dem Gerätecode extrahiert und zur Erzeugung des externen Aktivierungscodes verschlüsselt werden.

Die Prüfung der Gültigkeit des externen Aktivierungscodes kann durch Vergleich mit einem von der Steuereinheit erzeugten internen Aktivierungscode erfolgen. Die Steuereinheit hat beispielsweise die Möglichkeit, Informationen oder Daten, die sie zur Erzeugung des Gerätecodes verwendet hat, in gleicher Weise wie die externe Prüfeinrichtung zu verschlüsseln, um einen internen Aktivierungscode zu erzeugen. Die Gültigkeit des externen Aktivierungscodes kann dann von der Steuereir eit dadurch geprüft werden, dass sie den von ihr erzeugten internen Aktivierungscode mit dem von der externen Prüfeinrichtung erzeugten externen Aktivierungscode vergleicht. Ist der interne Aktivierungscode mit dem externen Aktivierungscode identisch, so liegt eine Berechtigung zur Funktionserweiterung vor und die Steuereinheit kann die Funktionserweiterung vornehmen.

Von Vorteil ist es, wenn die externe Prüfeinrichtung durch eine Decodierung des Gerätecodes die die Funktionserweiterung charakterisierende Identifikationsnummer bestimmt.

Die externe Prüfeinrichtung kann anhand des Gerätecodes erkennen, welche konkrete Funktionserweiterung gewünscht ist und kann dann prüfen, ob zu dieser Funktionserweiterung eine Berechtigung vorliegt.

Liegt eine Berechtigung vor, so kann die externe Prüfeinrichtung den externen Aktivierungscode erzeugen. Liegt keine Berechtigung vor, so kann die externe Prüfeinrichtung die Anfrage zurückweisen.

Zur Prüfung der Berechtigung kann die externe Prüfeinrichtung die aus dem decodierten Gerätecode bestimmte Identifikationsnummer auf das Vorliegen einer in einer Datenbank hinterlegten Berechtigung prüfen. Es kann beispielsweise vorgesehen sein, dass beim Erwerb einer Funktionserweiterung Berechtigungsdaten in einer Datenbank hinterlegt werden, auf die die Prüfeinrichtung zugreifen kann. Der Benutzer muss beim Erwerb der Funktionserweiterung weder angeben, für welches konkrete Schweißgerät die Funktionserweiterung vorgesehen ist, noch muss er angeben, zu welchem Zeitpunkt er die Funktionserweiterung vornehmen möchte. Gibt der Benutzer dann an einem bestimmten Schweißgerät einen Steuerbefehl für die gewünschte Funktionserweiterung ein, so generiert die Steuereinheit den Gerätecode unter Verwendung der die Funktionserweiterung charakterisierenden Identifikationsnummer. Die externe Prüfeinrichtung kann dann aus dem Gerätecode die der Funktionserweiterung entsprechende Identifikationsnummer extrahieren und mit in der Datenbank hinterlegten Daten vergleichen, um zu prüfen, ob eine Berechtigung vorliegt. Liegt eine Berechtigung vor, so kann sie auf Basis der extrahierten Daten einen externen Aktivierungscode erzeugen, aufgrund dessen dann die Steuereinheit die Berechtigung erkennen und daraufhin die Funktionserweiterung vornehmen kann.

Bevorzugt hinterlegt die externe Prüfeinrichtung Daten, die der aus dem decodierten Gerätecode bestimmten Identifikationsnummer entsprechen, in einer Datenbank, so dass diese Daten zu einem späteren Zeitpunkt jederzeit wieder abgerufen werden können. Es kann auch vorgesehen sein, dass die externe Prüfeinrichtung der Identifikationsnummer entsprechende Daten aus der Datenbank löscht oder in der Datenbank sperrt. Dies gibt auf konstruktiv einfache Weise die Möglichkeit, die aus dem decodierten Gerätecode bestimmten Informationen nur einmalig zu verwenden, so dass aufgrund dieser Informationen nur einmal eine Funktionserweiterung eines Schweißgeräts durchgeführt werden kann. Erhält die externe Prüfeinrichtung zu einem späteren Zeitpunkt durch Übertragung eines Gerätecodes dieselben Daten, so können diese nicht mehr mit in der Datenbank hinterlegten Daten verglichen werden und die externe Prüfeinrichtung kann dann eine Anfrage bezüglich einer Funktionserweiterung ablehnen. Das Sperren der Daten in der Datenbank kann beispielsweise auch erfolgen, wenn der Benutzer die Identifikationsnummer verliert oder ihm die Identifikationsnummer gestohlen wird. Wie nachfolgend noch näher erläutert wird können die Identifikationsnummer oder auch andere Berechtigungsdaten auf einem Speichermedium gespeichert werden und bei Verlust oder Diebstahl können die Identifikationsnummer oder sonstige Berechtigungsdaten in der Datenbank gesperrt werden, so dass ein unbefugter Gebrauch verhindert wird.

Zusammen mit dem Steuerbefehl können der Steuereinheit bei einer besonders bevorzugten Ausführungsform des erfindungsgemäßen Verfahrens Daten und/oder ein Softwareprogramm zur Funktionserweiterung eingegeben werden. Bei einer derartigen Ausgestaltung des erfindungsgemäßen Verfahrens kann der Benutzer nicht nur einen Steuerbefehl für eine gewünschte Funktionserweiterung der Steuereinheit eingeben, sondern er hat die Möglichkeit, zusammen mit dem Steuerbefehl auch andere Daten und/oder ein Softwareprogramm einzugeben. Insbesondere kann vorgesehen sein, dass zusammen mit dem Steuerbefehl ein Softwareprogramm eingegeben wird, das die gewünschte Funktionserweiterung ermöglicht. Es kann auch vorgesehen sein, dass entsprechende Softwareprogramme vom Hersteller des Schweißgeräts bereits im Herstellerwerk in einem Speicherglied der Steuereinheit hinterlegt werden. Wünscht der Benutzer eine Funktionserweiterung, so kann er der Steuereinheit einen entsprechenden Steuerbefehl erteilen und bei Vorliegen einer Berechtigung liest dann die Steuereinheit das Softwareprogramm aus dem Speicherglied aus zur Durchführung der Funktionserweiterung.

Der Steuerbefehl kann beispielsweise auf einem Speichermedium gespeichert werden, das von der Steuereinheit berührungslos oder berührungsbehaftet auslesbar ist. In entsprechender Weise können auch weitere Daten und/oder mindestens ein Softwareprogramm zur Funktionserweiterung auf einem Speichermedium gespeichert werden, das von der Speichereinheit berührungslos oder berührungsbehaftet auslesbar ist. Das Speichermedium kann beispielsweise eine Speicherkarte, ein USB-Stick, ein Memory-Chip, ein RFID-Tag oder NFC-Tag sein. Insbesondere Speicherkarten sind allgemein bekannt und werden im Alltag für unterschiedlichste Zwecke verwendet. Sie können kostengünstig in großer Stückzahl produziert werden und auch für das erfindungsgemäße Verfahren verwendet werden.

Soll die Funktionserweiterung durchgeführt werden, so kann das Speichermedium ausgelesen werden, insbesondere kann ein auf dem Speichermedium hinterlegter Steuerbefehl und/oder ein Softwareprogramm zur Funktionserweiterung ausgelesen werden.

Der Steuerbefehl, die Daten und/oder Softwareprogramme zur Funktionserweiterung werden bei einer vorteilhaften Ausführungsform des erfindungsgemäßen Verfahrens von einem Computer oder einem mobilen Telekommunikationsgerät übertragen, die berührungslos oder berührungsbehaftet mit dem Steuergerät signalleitend verbunden sind, zum Beispiel über eine serielle Verbindung, Ethernet, USB, Bluetooth oder NFC. Insbesondere der Einsatz eines mobilen Telekommunikationsgeräts, beispielsweise eines Mobiltelefons, ist von Vorteil, da derartige Geräte dem Benutzer zu anderen Zwecken sowieso zur Verfügung stehen und er diese Geräte nunmehr auch zur Funktionserweiterung von Schweißgeräten nutzen kann.

Es kann beispielsweise vorgesehen sein, dass der Steuerbefehl, die Daten und/oder Softwareprogramme zur Funktionserweiterung von einem Mobiltelefon des Benutzers übertragen werden. Der Benutzer kann ein Softwareprogramm zur Funktionserweiterung über das Internet von einer Datenbank herunterladen und an die Steuereinheit des Schweißgeräts übertragen. Die Steuereinheit erkennt in der Übertragung einen Steuerbefehl und führt anschließend in Kooperation mit der externen Prüfeinrichtung die Berechtigungsprüfung durch.

Wie bereits erwähnt, ist es günstig, wenn der Gerätecode eine das Schweißgerät eindeutig identifizierende Gerätekennung beinhaltet oder unter Verwendung einer das Schweißgerät eindeutig identifizierenden Gerätekennung erzeugt wird. Als Gerätekennung kann beispielsweise die Serialnummer des Schweißgeräts verwendet werden.

Es kann auch vorgesehen sein, dass der Gerätecode die Konfiguration des Schweißgeräts charakterisierende Informationen beinhaltet oder unter Verwendung von derartigen Informationen erzeugt wird. Diese Informationen können von der externen Prüfeinrichtung aus dem Gerätecode extrahiert und beispielsweise in einer Datenbank hinterlegt und/oder mit in einer Datenbank hinterlegten entsprechenden Informationen verglichen werden.

Von Vorteil ist es, wenn der Gerätecode an einer Anzeigeeinrichtung des Schweißgeräts optisch oder afisch angezeigt wird. Nach Eingabe eines Steuerbefehls zur Durchführung einer Funktionserweiterung kann der Benutzer an der Anzeigeeinrichtung des Schweißgeräts den Gerätecode optisch oder grafisch erfassen und anschließend kann der Benutzer den Gerätecode an die externe Prüfeinrichtung übermitteln. Eine grafische Anzeige des Gerätecodes ist von besonderem Vorteil, denn dies gibt dem Benutzer die Möglichkeit, den Gerätecode mittels eines Sensors eines mobilen Telekommunikationsgeräts, insbesondere eines Mobiltelefons, oder eines Computers berührungslos zu erfassen und vom mobilen Telekommunikationsgerät oder Computer an die externe Prüfeinrichtung zu übertragen. Als Sensor kann beispielsweise eine Kamera zum Einsatz kommen.

Vorteilhafterweise wird der Gerätecode an der Anzeigeeinrichtung des Schweißgeräts in Form eines sogenannten QR-Codes (Quick Response Code) angezeigt, der von der Kamera eines Mobiltelefons oder eines sonstigen Telekommunikationsgeräts erfasst werden kann, wobei der QR-Code zusätzlich zum Gerätecode auch Telekommunikationsdaten zum Herstellen einer Verbindung mit der externen Prüfeinrichtung aufweisen kann. Die Verbindung zwischen dem Telekommunikationsgerät und der externe Prüfeinrichtung kann beispielsweise über das Internet erfolgen, wobei der QR-Code zusätzlich zu dem von der Steuereinheit generierten Gerätecode die Internetadresse der externen Prüfeinrichtung enthalten kann.

Der von der externen Prüfeinrichtung generierte externe Aktivierungscode wird der Steuereinheit bei einer vorteilhaften Ausführungsform des erfindungsgemäßen Verfahrens über die Eingabeeinrichtung eingegeben. Beispielsweise kann vorgesehen sein, dass der Benutzer den externen Aktivierungscode manuell eingibt. Von Vorteil ist es, wenn der externe Aktivierungscode vom Benutzer über ein Mobiltelefon, ein sonstiges mobiles Telekommunikationsgerät oder einen Computer an die Eingabeeinrichtung des Schweißgeräts übertragen wird.

Der Gerätecode wird günstigerweise über eine Kommunikationsleitung oder drahtlos an die externe Prüfeinrichtung übertragen.

Bevorzugt werden der Gerätecode und/oder der externe Aktivierungscode über ein mobiles Telekommunikationsgerät übertragen, beispielsweise in Form einer SMS-Nachricht (SMS - short message service).

Es kann vorgesehen sein, dass der externe Aktivierungscode nur einmalig verwendbar ist. Falls also ein Benutzer den externen Aktivierungscode nach einer erstmaligen Funktionserweiterung eines Schweißgeräts erneut demselben oder einem anderen Schweißgerät eingibt, so führt der Aktivierungscode nicht zu einer erneuten Funktionsberechtigung.

Günstig ist es, wenn die Anwendungsdauer der Funktionserweiterung oder der Aktivierungszeitraum für die Funktionserweiterung zeitlich beschränkt sind. Dies gibt dem Hersteller die Möglichkeit, zeitlich limitierte Funktionserweiterungen zu vertreiben oder Funktionserweiterungen, die nur innerhalb eines bestimmten Zeitraums erfolgen können. Beispielsweise kann vorgesehen sein, dass eine bestimmte Funktionserweiterung nur für den Zeitraum von einigen Stunden, Tagen oder Wochen nach einer erstmaligen Aktivierung angewandt werden kann. Der Benutzer hat dadurch beispielsweise die Möglichkeit, bestimmte Schweißprogramme, die eine Funktionserweiterung darstellen, nur für einen vorgegebenen Zeitraum zu verwenden. Nach Ablauf dieses Zeitraums ist es erforderlich, die Funktionserweiterung erneut vom Hersteller zu erwerben. Es kann auch vorgesehen sein, dass eine bestimmte Funktionserweiterung nur innerhalb eines bestimmten Zeitraums aktiviert werden kann. Die aktivierte Funktionserweiterung kann dann vom Benutzer eventuell über einen unbeschränkten Zeitraum verwendet werden, die Aktivierung selbst hat allerdings innerhalb eines bestimmten Zeitraums zu erfolgen.

Als externe Prüfeinrichtung wird vorteilhafterweise ein mit einer Datenbank verbundener Server verwendet. Derartige Server sind dem Fachmann an sich bekannt und bedürfen daher vorliegend keiner näheren Erläuterung.

Wie eingangs erwähnt, betrifft die Erfindung nicht nur ein Verfahren zur Erweiterung der Funktionen eines elektrischen Schweißgeräts sondern auch ein Schweißgerät zur Durchführung des Verfahrens. Hierzu wird erfindungsgemäß ein Schweißgerät vorgeschlagen, das eine programmierbare Steuereinheit aufweist und derart ausgestaltet ist, dass Funktionen des Schweißgeräts erweitert werden können, wobei das Schweißgerät eine Eingabeeinrichtung aufweist sowie eine Codeerzeugungseinrichtung zur Erzeugung eines Gerätecodes und ein Prüfglied zur Prüfung der Gültigkeit einer Funktionserweiterung anhand eines dem Prüfglied eingebbaren externen Aktivierungscodes. Wie bereits erwähnt, kann mittels der Codeerzeugungseinrichtung nach Erteilen eines Steuerbefehls ein Gerätecode erzeugt werden, der an eine externe Prüfeinrichtung übertragen werden kann. Liegt die Berechtigung zu einer Funktionserweiterung vor, so überträgt die Prüfeinrichtung einen externen Aktivierungscode an die Steuereinheit und das Prüfglied des Schweißgeräts prüft die Gültigkeit der Funktionserweiterung anhand des externen Aktivierungscodes.

Die Codeerzeugungseinrichtung weist ein Codierungsglied auf zur Erzeugung des Gerätecodes.

Außerdem weist das Schweißgerät ein Verschlüsselungsglied auf zur Erzeugung eines internen Aktivierungscodes. Dies gibt die Möglichkeit, den internen Aktivierungscode mit dem von der externen Prüfeinrichtung erzeugten externen Aktivierungscode mittels des Prüfglieds zu vergleichen.

Von Vorteil ist es, wenn mittels der Codeerzeugungseinrichtung eine Identifikationsnummer zusammen mit einer schweißgerätspezifischen Gerätekennung codierbar ist zur Erzeugung des Gerätecodes. Wie bereits erwähnt, charakterisiert die Identifikationsnummer eine Funktionserweiterung. Der Steuerbefehl, der der Steuereinheit eingebbar ist, beinhaltet günstigerweise die Identifikationsnummer, so dass diese der Codeerzeugungseinrichtung über die Eingabeeinrichtung des Schweißgeräts eingegeben werden kann.

Die Identifikationsnummer und die schweißgerätespezifische Gerätekennung können nicht nur zur Erzeugung des Gerätecodes verwendet werden, sondern sie können zusätzlich auch zur Erzeugung eines internen Aktivierungscodes verwendet werden, der mit dem externen Aktivierungscode verglichen werden kann.

Die nachfolgende Beschreibung vorteilhafter Ausführungsformen der Erfindung dient im Zusammenhang mit der Zeichnung der näheren Erläuterung. Es zeigen:

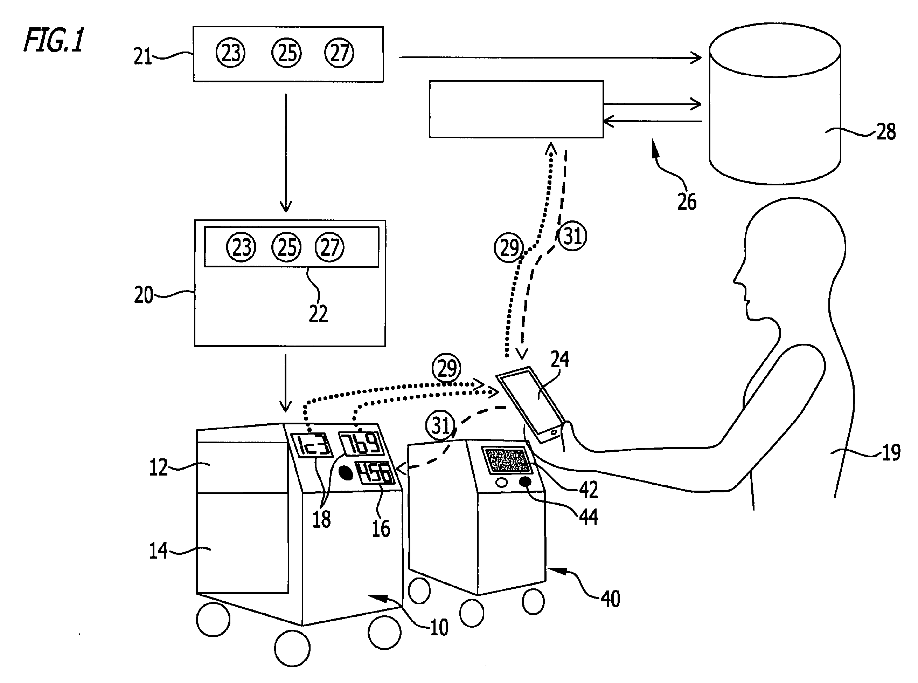

- Figur 1:: eine schematische Darstellung zweier vorteilhafter Ausführungsformen von erfindungsgemäßen Schweißgeräten, deren Funktionen durch Zusammenwirken mit einer externen Prüfeinrichtung erweitert werden können; und
- Figur 2:: eine Veranschaulichung einzelner Verfahrensschritte zur Erweiterung der Funktionen der in Figur 1 dargestellten Schweißgeräte.

In der Zeichnung ist schematisch eine insgesamt mit dem Bezugszeichen 10 belegte erste vorteilhafte Ausführungsform eines erfindungsgemäßen Schweißgeräts dargestellt. Das Schweißgerät 10 weist eine Steuereinheit 12 auf sowie ein Leistungsteil 14, das von der Steuereinheit 12 gesteuert wird und an das in üblicherweise ein an sich bekannter und deshalb zur Erzielung einer besseren Übersicht in der Zeichnung nicht dargestellter Schweißbrenner angeschlossen werden kann. Das Schweißgerät 10 weist außerdem eine Eingabeeinrichtung 16 auf zur Eingabe von Steuerbefehlen und Softwareprogrammen sowie eine Anzeigeeinrichtung 18. Im dargestellten Ausführungsbeispiel weist die Anzeigeeinrichtung 18 mehrere 7-Segment-Anzeigen auf.

Mittels des Schweißgeräts 10 können vom Benutzer 19 in üblicher Weise unterschiedliche Schweißaufgaben erledigt werden. Die Funktionen des Schweißgeräts 10 können vom Benutzer 19 erweitert werden. Hierzu kann der Benutzer 19 im dargestellten Ausführungsbeispiel ein Speichermedium in Form einer Speicherkarte 20 erwerben, die von der Eingabeeinrichtung 16 berührungslos oder berührungsbehaftet ausgelesen werden kann. Die Speicherkarte 20 weist ein Speicherglied 22 auf, in dem von einem Programmierer 21 der Speicherkarte 20 beispielsweise im Herstellerwerk des Schweißgeräts 10 ein Steuerbefehl 23 zur Durchführung einer Funktionserweiterung sowie ein entsprechendes Softwareprogramm 25 für die Funktionserweiterung und eine die Funktionserweiterung charakterisierende Identifikationsnummer 27 gespeichert wurden. Diese Informationen wurden außerdem in einer Datenbank 28 einer externen Prüfeinrichtung 26 hinterlegt.

Nach Auslesen der Speicherkarte 20 generiert die Steuereinheit 12 des Schweißgeräts 10 einen Gerätecode 29, der an der Anzeigeeinrichtung 18 angezeigt wird. Zur Erzeugung des Gerätecodes 29 wird u. a. die im Speicherglied 22 hinterlegte Identifikationsnummer 27 verwendet, wobei diese codiert wird.

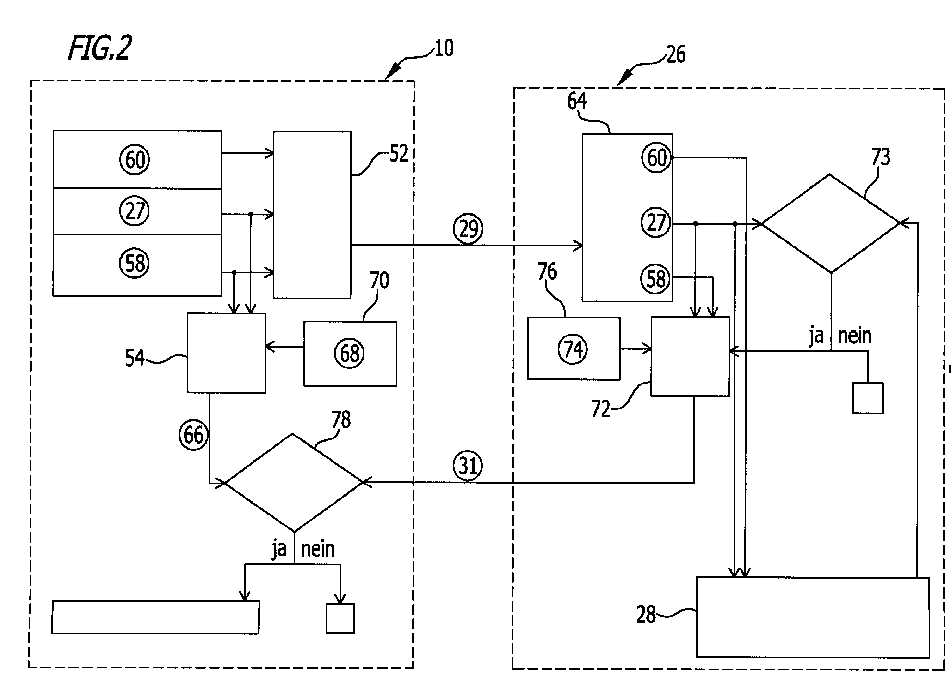

Der Benutzer 19 kann den an der Anzeigeeinrichtung 18 angezeigten Gerätecode 29 über ein mobiles Telekommunikationsgerät, beispielsweise über ein Mobiltelefon 24, an die eine externe Prüfeinrichtung 26 übertragen, die den Gerätecode 29 decodiert und anhand der extrahierten Identifikationsnummer 27 die Berechtigung für die Funktionserweiterung prüft. Die externe Prüfeinrichtung 26 greift hierzu auf die Daten zurück, die in einer Datenbank 28 hinterlegt wurden. Erkennt die externe Prüfeinrichtung 26, dass eine Berechtigung für eine Funktionserweiterung vorliegt, so erzeugt die externe Prüfeinrichtung einen externen Aktivierungscode 31, der an das Mobiltelefon 24 übertragen wird und am Monitor des Mobiltelefons 24 dem Benutzer 19 angezeigt wird. Der Benutzer 19 kann dann den externen Aktivierungscode 31 über die Eingabeeinrichtung 16 der Steuereinheit 12 eingeben. Die Steuereinheit 12 prüft die Gültigkeit des externen Aktivierungscodes 31 und führt gegebenenfalls die Funktionserweiterung durch. Das erfindungsgemäße Verfahren zur Funktionserweiterung wird nachfolgend unter Bezugnahme auf Figur 2 detaillierter erläutert.

Statt eines Schweißgeräts 10 mit einer Anzeigeeinrichtung 18, an der der Gerätecode dem Benutzer zur manuellen Eingabe in das Mobiltelefon 24 angezeigt wird, kann auch ein Schweißgerät 40 zum Einsatz kommen, das weitgehend identisch ausgestaltet wie das voranstehend erläuterte Schweißgerät 10. Vom Schweißgerät 10 unterscheidet sich das Schweißgerät 40 durch eine Anzeigeeinrichtung 42, an der der Gerätecode dem Benutzer zusammen mit einer Internetadresse in Form eines QR-Codes grafisch angezeigt wird. Der QR-Code kann von einer Kamera des Mobiltelefons 24 berührungslos erfasst werden und mittels des Mobiltelefons 24 kann die angezeigte Internetadresse angewählt werden, über die das Mobiltelefon 24 mit der externen Prüfeinrichtung 26 verbunden werden kann zur Übertragung des an der Anzeigeeinrichtung 42 grafisch angezeigten Gerätecodes 29. Liegt eine Berechtigung zur Funktionserweiterung vor, so kann der externe Aktivierungscode 31 an das Mobiltelefon 24 übertragen und an dessen Monitor ebenfalls in Form eines QR-Codes grafisch angezeigt werden. Eine Kamera 44 des Schweißgeräts 40 kann den am Monitor des Mobiltelefons 24 angezeigten externen Aktivierungscode 31 berührungslos erfassen, und bei Gültigkeit des externen Aktivierungscodes 31 kann von der Steuereinheit des Schweißgeräts 40 die gewünschte Funktionserweiterung durchgeführt werden.

Wie aus Figur 2 deutlich wird, weist das Schweißgerät 10 ebenso wie das Schweißgerät 40 eine Codeerzeugungseinrichtung mit einem Codierglied 52 auf und ein Verschlüsselungsglied 54. Dem Codierglied 52 können die im Speicherglied 22 der Speicherkarte 20 hinterlegte Identifikationsnummer 27 sowie eine von der Steuereinheit 12 erzeugte Vorgangsnummer 58 und günstigerweise auch Zusatzinformationen 60, wie beispielsweise eine das Schweißgerät 10 bzw. das Schweißgerät 40 eindeutig charakterisierende Gerätekennung und/oder die Konfiguration des Schweißgeräts 10 bzw. des Schweißgeräts 40 charakterisierende Informationen eingegeben werden. Das Codierglied 52 codiert die Identifikationsnummer 27, die Vorgangsnummer 58 und die Zusatzinformationen 60 und erzeugt den Gerätecode 29, der an ein Decodierglied 64 der externen Prüfeinrichtung 26 übertragen wird. Die Identifikationsnummer 27 und die Vorgangsnummer 58 werden darüber hinaus dem Verschlüsselungsglied 54 eingegeben, das unter Verwendung der Identifikationsnummer 27 und der Vorgangsnummer 58 einen internen Aktivierungscode 66 erzeugt. Das Verschlüsselungsglied 54 führt hierzu eine Verschlüsselung durch unter Zuhilfenahme geheimer Informationen 68, die in einem Speicherglied 70 der Steuereinheit 12 hinterlegt sind.

Der Gerätecode 29 wird vom Decodierglied 64 der externen Prüfeinrichtung 26 decodiert und vom decodierten Gerätecode werden die Identifikationsnummer 27, die Vorgangsnummer 58 und die Zusatzinformationen 60 extrahiert. Die Zusatzinformationen 60 und die Identifikationsnummer 27 werden im dargestellten Ausführungsbeispiel in der Datenbank 28 der externen Prüfeinrichtung 26 hinterlegt und die Identifikationsnummer 27 wird von einem Prüfglied 73 der externen Prüfeinrichtung 26 mit den in der Datenbank 28 hinterlegten Identifikationsnummern verglichen. Wie bereits erwähnt, wurde die auf dem Speicherglied 22 der Speicherkarte 20 hinterlegte Identifikationsnummer 27 in der Datenbank 28 gespeichert, so dass die aus dem Gerätecode 29 extrahierte Identifikationsnummer auf einfache Weise mit der in der Datenbank 28 hinterlegten Identifikationsnummer verglichen werden kann.

Falls die im Gerätecode 29 enthaltene Identifikationsnummer 27 mit einer in der Datenbank 28 hinterlegten Identifikationsnummer übereinstimmt, dann liegt eine Berechtigung für die gewünschte Funktionserweiterung vor. Dies hat zur Folge, dass von einem Verschlüsselungsglied 72 der externen Prüfeinrichtung 26 mit Hilfe eines Verschlüsselungsalgorithmus der externe Aktivierungscode 31 erzeugt wird, der an die Steuereinheit 12 übertragen wird. Zur Erzeugung des externen Aktivierungscodes 31 werden die Identifikationsnummer 27 und die Vorgangsnummer 58, die aus dem decodierten Gerätecode 29 extrahiert wurden, in derselben Weise verschlüsselt wie vom Verschlüsselungsglied 54 der Steuereinheit 12. Das Verschlüsselungsglied 72 der externen Prüfeinrichtung 26 verwendet zur Verschlüsselung geheime Informationen 74, die in einem Speicherglied 76 der externen Prüfeinrichtung 26 hinterlegt sind. Der externe Aktivierungscode 31 ist somit identisch mit dem internen Aktivierungscode 66, den das Verschlüsselungsglied 54 erzeugt hat.

Der externe Aktivierungscode 31 wird an ein Prüfglied 78 der Steuereinheit 12 übertragen und von diesem mit dem internen Aktivierungscode 66 verglichen. Sind die beiden Codes identisch, so wird die gewünschte Funktionserweiterung durchgeführt und dem Benutzer an der Anzeigeeinrichtung 18 bzw. an der Anzeigeeinrichtung 42 angezeigt. Liegt keine Identität vor, so wird die Durchführung einer Funktionserweiterung abgelehnt und die Ablehnung wird dem Benutzer an der Anzeigeeinrichtung 18 bzw. an der Anzeigeeinrichtung 42 angezeigt.

Stimmt die im Gerätecode 29 enthaltene Identifikationsnummer 27 nicht mit einer in der Datenbank 28 hinterlegten Identifikationsnummer überein, so liegt keine Berechtigung für die gewünschte Funktionserweiterung vor und das Prüfglied 73 lehnt die Funktionserweiterung ab.

Es kann vorgesehen sein, dass die Identifikationsnummer 27 nur während eines bestimmten Zeitraums zu einer Funktionserweiterung berechtigt. Hierzu kann der Zeitpunkt, an dem der die Identifikationsnummer 27 beinhaltende Gerätecode 29 von der externen Prüfeinrichtung 26 empfangen wird, mit einem in der Datenbank 28 hinterlegten Berechtigungszeitraum verglichen werden. Liegt der Empfangszeitpunkt im Berechtigungszeitraum, so wird der externe Aktivierungscode 31 übertragen. Liegt der Empfangszeitpunkt außerhalb des Berechtigungszeitraums, so wird kein externer Aktivierungscode erzeugt und die Anfrage für die Funktionserweiterung wird zurückgewiesen.

Es kann auch vorgesehen sein, dass eine Funktionserweiterung nur für eine vorgegebene Anwendungsdauer verwendet werden kann. Hierzu kann die Steuereinheit 12 ein Zeitglied aufweisen, das die Anwendungsdauer erfasst und nach Ablauf einer maximalen Anwendungsdauer die Funktionserweiterung wieder abschaltet.

## Patentansprüche

1. Verfahren zur Erweiterung der Funktionen eines elektrischen Schweißgeräts, das eine programmierbare Steuereinheit und eine Eingabeeinrichtung aufweist, wobei der Steuereinheit ein Steuerbefehl für eine gewünschte Funktionserweiterung erteilt wird und die Steuereinheit einen Gerätecode erzeugt, der an eine externe Prüfeinrichtung übertragen wird, wobei die externe Prüfeinrichtung unter Verwendung des Gerätecodes die Berechtigung zur Funktionserweiterung prüft und bei Vorliegen einer Berechtigung einen externen Aktivierungscode erzeugt, der der Steuereinheit übermittelt wird, und wobei die Steuereinheit die Gültigkeit des externen Aktivierungscodes prüft und bei Vorliegen der Gültigkeit die Funktionserweiterung vornimmt, **dadurch gekennzeichnet, dass** die Steuereinheit den Gerätecode unter Verwendung des Steuerbefehls erzeugt, wobei der Steuerbefehl eine die gewünschte Funktionserweiterung charakterisierende Identifikationsnummer beinhaltet und zur Erzeugung des Gerätecodes die Identifikationsnummer verwendet wird, wobei die Identifikationsnummer zur Erzeugung des Gerätecodes codiert wird.

2. Verfahren nach Anspruch 1, **dadurch gekennzeichnet, dass** zur Erzeugung des externen Aktivierungscodes ein Verschlüsselungsalgorithmus verwendet wird, der den Gerätecode oder die Identifikationsnummer nutzt.

3. Verfahren nach Anspruch 1 oder 2, **dadurch gekennzeichnet, dass** zur Prüfung von dessen Gültigkeit der externe Aktivierungscode mit einem von der Steuereinheit erzeugten internen Aktivierungscode verglichen wird.

4. Verfahren nach einem der voranstehenden Ansprüche, **dadurch gekennzeichnet, dass** die externe Prüfeinrichtung durch eine Decodierung des Gerätecodes die Identifikationsnummer bestimmt.

5. Verfahren nach Anspruch 4, **dadurch gekennzeichnet, dass** die externe Prüfeinrichtung die aus dem decodierten Gerätecode bestimmte Identifikationsnummer auf das Vorliegen einer in einer Datenbank hinterlegten Berechtigung prüft und je nach Vorliegen der Berechtigung den externen Aktivierungscode erzeugt oder die Anfrage zurückweist.

6. Verfahren nach Anspruch 4 , **dadurch gekennzeichnet, dass** die externe Prüfeinrichtung Daten, die der aus dem decodierten Gerätecode bestimmten Identifikationsnummer entsprechen, in einer Datenbank hinterlegt oder gleichlautende Daten in der Datenbank löscht oder sperrt.

7. Verfahren nach einem der voranstehenden Ansprüche, **dadurch gekennzeichnet, dass** der Steuereinheit zusammen mit dem Steuerbefehl Daten und/oder ein Softwareprogramm zur Funktionserweiterung eingegeben werden.

8. Verfahren nach einem der voranstehenden Ansprüche, **dadurch gekennzeichnet, dass** der Steuerbefehl, die Daten und/oder das Softwareprogramm zur Funktionserweiterung auf einem Speichermedium gespeichert werden, das von der Steuereinheit berührungslos oder berührungsbehaftet auslesbar ist.

9. Verfahren nach einem der Ansprüche 1 bis 7, **dadurch gekennzeichnet, dass** der Steuerbefehl, die Daten und/oder das Softwareprogramm zur Funktionserweiterung von einem Computer oder einem mobilen Telekommunikationsgerät übertragen werden, die berührungslos oder berührungsbehaftet mit dem Steuergerät signalübertragend verbunden sind.

10. Verfahren nach einem der voranstehenden Ansprüche, **dadurch gekennzeichnet, dass** der Gerätecode eine das Schweißgerät eindeutig identifizierende Gerätekennung beinhaltet oder unter Verwendung derselben erzeugt wird.

11. Verfahren nach einem der voranstehenden Ansprüche, **dadurch gekennzeichnet, dass** der Gerätecode die Konfiguration des Schweißgeräts charakterisierende Informationen beinhaltet oder unter Verwendung derselben erzeugt wird.

12. Verfahren nach einem der voranstehenden Ansprüche, **dadurch gekennzeichnet, dass** der Gerätecode an einer Anzeigeeinrichtung des Schweißgeräts optisch oder grafisch angezeigt wird.

13. Verfahren nach einem der voranstehenden Ansprüche, **dadurch gekennzeichnet, dass** der externe Aktivierungscode der Steuereinheit über die Eingabeeinrichtung übermittelt wird.

14. Verfahren nach einem der voranstehenden Ansprüche, **dadurch gekennzeichnet, dass** der Gerätecode über eine Kommunikationsleitung oder drahtlos an die externe Prüfeinrichtung übertragen wird.

15. Verfahren nach einem der voranstehenden Ansprüche, **dadurch gekennzeichnet, dass** der Gerätecode und/oder der externe Aktivierungscode über ein mobiles Telekommunikationsgerät übertragen werden.

16. Verfahren nach einem der voranstehenden Ansprüche, **dadurch gekennzeichnet, dass** der externe Aktivierungscode nur einmalig verwendbar ist.

17. Verfahren nach einem der voranstehenden Ansprüche, **dadurch gekennzeichnet, dass** die Anwendungsdauer der Funktionserweiterung und/oder der Aktivierungszeitraum der Funktionserweiterung zeitlich beschränkt sind.

18. Verfahren nach einem der voranstehenden Ansprüche, **dadurch gekennzeichnet, dass** als externe Prüfeinrichtung ein mit einer Datenbank verbundener Server verwendet wird.

19. Schweißgerät zur Durchführung des Verfahrens nach einem der voranstehenden Ansprüche, wobei das Schweißgerät (10) eine programmierbare Steuereinheit (12) aufweist und Funktionen des Schweißgeräts (10) erweitert werden können, und wobei das Schweißgerät (10) eine Eingabeeinrichtung (16) aufweist, und wobei das Schweißgerät (10) eine Codeerzeugungseinrichtung aufweist zur Erzeugung eines Gerätecodes (29), und wobei das Schweißgerät (10) ein Prüfglied (78) aufweist zur Prüfung der Berechtigung einer Funktionserweiterung anhand eines dem Prüfglied (78) eingebbaren externen Aktivierungscodes (31) **dadurch gekennzeichnet, dass** die Codeerzeugungseinrichtung ein Codierglied (52) aufweist zur Erzeugung des Gerätecodes, dass das Schweißgerät (10) ein Verschlüsselungsglied (54) aufweist zur Erzeugung eines internen Aktivierungscodes (66) und
dass mittels des Codierglieds (52) eine Identifikationsnummer (27), die eine Funktionserweiterung charakterisiert und dem Codierglied (52) über die Eingabeeinrichtung (16) eingebbar ist, zusammen mit einer schweißgerätspezifischen Gerätekennung codierbar ist zur Erzeugung des Gerätecodes.

## Claims

1. Method for extending the functionality of an electric welding apparatus which comprises a programmable control unit and an input device, wherein a control command for a desired functional extension is issued to the control unit, and the control unit generates an apparatus code which is transmitted to an external verifying facility, wherein the external verifying facility uses the apparatus code to verify entitlement to the functional extension and, if entitlement exists, generates an external activation code which is transmitted to the control unit, and wherein the control unit verifies the validity of the external activation code and, if it is valid, implements the functional extension, **characterised in that** the control unit generates the apparatus code using the control command, the control command containing an identification number which characterises the desired functional extension and the identification number being used for generating the apparatus code, the identification number being encoded for generating the apparatus code.

2. Method according to claim 1, **characterised in that** an encryption algorithm which makes use of the apparatus code or the identification number is used for generating the external activation code.

3. Method according to claim 1 or 2, **characterised in that** the validity of the external activation code is verified by comparing it with an internal activation code generated by the control unit.

4. Method according to any one of the preceding claims, **characterised in that** the external verifying facility determines the identification number by decoding the apparatus code.

5. Method according to claim 4, **characterised in that** the external verifying facility verifies the identification number determined from the decoded apparatus code for the existence of an entitlement stored in a database and, depending on the existence of the entitlement, generates the external activation code or rejects the request.

6. Method according to claim 4, **characterised in that** the external verifying facility stores data which correspond to the identification number determined from the decoded apparatus code in a database or deletes or locks identical data in the database.

7. Method according to any one of the preceding claims, **characterised in that**, together with the control command, data and/or a software program for the functional extension are input into the control unit.

8. Method according to any one of the preceding claims, **characterised in that** the control command, the data and/or the software program for the functional extension are stored on a storage medium which is readable by the control unit contactlessly or with contact.

9. Method according to any one of claims 1 to 7, **characterised in that** the control command, the data and/or the software program for the functional extension are transmitted by a computer or a mobile telecommunication device which are connected contactlessly or with contact in signal-transmitting manner with the control device.

10. Method according to any one of the preceding claims, **characterised in that** the apparatus code contains an apparatus ID which unambiguously identifies the welding apparatus or is generated using said apparatus ID.

11. Method according to any one of the preceding claims, **characterised in that** the apparatus code contains information which characterises the configuration of the welding apparatus or is generated using said information.

12. Method according to any one of the preceding claims, **characterised in that** the apparatus code is displayed visually or graphically on a display device of the welding apparatus.

13. Method according to any one of the preceding claims, **characterised in that** the external activation code is transmitted to the control unit via the input device.

14. Method according to any one of the preceding claims, **characterised in that** the apparatus code is transmitted to the external verifying facility via a communication line or wirelessly.

15. Method according to any one of the preceding claims, **characterised in that** the apparatus code and/or the external activation code are transmitted via a mobile telecommunication device.

16. Method according to any one of the preceding claims, **characterised in that** the external activation code is usable only once.

17. Method according to any one of the preceding claims, **characterised in that** the period of use of the functional extension and/or the activation period of the functional extension are time-limited.

18. Method according to any one of the preceding claims, **characterised in that** a server connected to a database is used as the external verifying facility.

19. Welding apparatus for carrying out the method according to any one of the preceding claims, the welding apparatus (10) comprising a programmable control unit (12) and the functionality of the welding apparatus (10) being extendable, and the welding apparatus (10) comprising an input device (16), and the welding apparatus (10) comprising a code generation device for generating an apparatus code (29), and the welding apparatus (10) comprising a verifying element (78) for verifying entitlement to a functional extension on the basis of an external activation code (31) which is configured to be input into the verifying element (78), **characterised in that** the code generation device comprises an encoding element (52) for generating the apparatus code, **in that** the welding apparatus (10) comprises an encryption element (54) for generating an internal activation code (66), and **in that** an identification number (27), which characterises a functional extension and is configured to be input into the encoding element (52) via the input device (16), is encodable, together with an apparatus ID specific to the welding apparatus, by means of the encoding element (52) for generating the apparatus code.

## Revendications

1. Procédé d'extension des fonctions d'un poste de soudure électrique comportant une unité de commande programmable et un dispositif de saisie, où une instruction de commande pour une extension de fonctions souhaitée est délivrée à l'unité de commande et l'unité de commande génère un code d'appareil qui est transmis à un dispositif de contrôle externe, où le dispositif de contrôle externe contrôle l'autorisation pour l'extension de fonctions au moyen du code d'appareil et génère un code d'activation externe en cas d'existence d'une autorisation, lequel est transmis à l'unité de commande, et où l'unité de commande contrôle la validité du code d'activation externe et procède à l'extension de fonctions en cas de confirmation de la validité, **caractérisé en ce que** l'unité de commande génère le code d'appareil au moyen de l'instruction de commande, ladite instruction de commande contenant un numéro d'identification caractérisant l'extension de fonctions souhaitée et le numéro d'identification étant utilisé pour générer le code d'appareil, ledit numéro d'identification étant codé pour générer le code d'appareil.

2. Procédé selon la revendication 1, **caractérisé en ce qu'**un algorithme de cryptage est utilisé pour générer le code d'activation externe, lequel exploite le code d'appareil ou le numéro d'identification.

3. Procédé selon la revendication 1 ou 2, **caractérisé en ce que** pour contrôler sa validité, le code d'activation externe est comparé à un code d'activation interne généré par l'unité de commande.

4. Procédé selon l'une des revendications précédentes, **caractérisé en ce que** le dispositif de contrôle externe détermine le numéro d'identification par décodage du code d'appareil.

5. Procédé selon la revendication 4, **caractérisé en ce que** le dispositif de contrôle externe contrôle l'existence d'une autorisation stockée dans une base de données pour le numéro d'identification déterminé à partir du code d'appareil décodé, et génère le code d'activation externe ou rejette la demande en fonction de l'existence de l'autorisation.

6. Procédé selon la revendication 4, **caractérisé en ce que** le dispositif de contrôle externe stocke dans une base de données des données correspondant au numéro d'identification déterminé à partir du code d'appareil décodé, ou supprime des données similaires ou bloque l'accès à celles-ci.

7. Procédé selon l'une des revendications précédentes, **caractérisé en ce que** des données et/ou un programme informatique sont entrés dans l'unité de commande avec l'instruction de commande pour l'extension des fonctions.

8. Procédé selon l'une des revendications précédentes, **caractérisé en ce que** l'instruction de commande, les données et/ou le programme informatique pour l'extension des fonctions sont stockés sur un support de mémoire lisible par l'unité de commande sans contact ou par activation de touche.

9. Procédé selon l'une des revendications 1 à 7, **caractérisé en ce que** l'instruction de commande, les données et/ou le programme informatique pour l'extension des fonctions sont transmis par un ordinateur ou un appareil de télécommunication mobile qui sont en liaison de transmission de signaux sans contact ou par activation de touche avec l'appareil de commande.

10. Procédé selon l'une des revendications précédentes, **caractérisé en ce que** le code d'appareil contient une identification d'appareil identifiant le poste de soudure de manière univoque ou est généré au moyen de celle-ci.

11. Procédé selon l'une des revendications précédentes, **caractérisé en ce que** le code d'appareil contient des informations caractérisant la configuration du poste de soudure ou est généré au moyen de celles-ci.

12. Procédé selon l'une des revendications précédentes, **caractérisé en ce que** le code d'appareil est affiché optiquement ou graphiquement sur un dispositif d'affichage du poste de soudure.

13. Procédé selon l'une des revendications précédentes, **caractérisé en ce que** le code d'activation externe de l'unité de commande est communiqué au moyen du dispositif de saisie.

14. Procédé selon l'une des revendications précédentes, **caractérisé en ce que** le code d'appareil est transmis au dispositif de contrôle externe par une ligne de communication, ou sans fil.

15. Procédé selon l'une des revendications précédentes, **caractérisé en ce que** le code d'appareil et/ou le code d'activation externe sont transmis au moyen d'un appareil de communication mobile.

16. Procédé selon l'une des revendications précédentes, **caractérisé en ce que** le code d'activation externe n'est utilisable qu'une seule fois.

17. Procédé selon l'une des revendications précédentes, **caractérisé en ce que** la durée d'utilisation de l'extension de fonctions et/ou la période d'activation de l'extension de fonctions sont limitées.

18. Procédé selon l'une des revendications précédentes, **caractérisé en ce qu'**un serveur relié à une base de données est utilisé comme dispositif de contrôle externe.

19. Poste de soudure pour l'exécution du procédé selon l'une des revendications précédentes, où ledit poste de soudure (10) comporte une unité de commande (12) programmable et des fonctions du poste de soudure (10) peuvent être étendues, où ledit poste de soudure (10) comporte un dispositif de saisie (16), où le poste de soudure (10) comporte un dispositif générateur de code pour la génération d'un code d'appareil (29), et où le poste de soudure (10) comporte un organe de contrôle (78) pour le contrôle d'autorisation d'une extension de fonctions sur la base d'un code d'activation externe (31) pouvant être entrée dans l'organe de contrôle (78), **caractérisé en ce que** le dispositif générateur de code comprend un organe de codage (52) pour générer le code d'appareil, **en ce que** le poste de soudure (10) comprend un organe de cryptage (54) pour la génération d'un code d'activation interne (66), et **en ce qu'**au moyen de l'organe de codage (52), un numéro d'identification (27) caractérisant une extension des fonctions et pouvant être entré dans l'organe de codage (52) par le dispositif de saisie (16), peut être codé avec une identification d'appareil spécifique au poste de soudure pour générer le code d'appareil.
